(19)

Europäisches
Patentamt

European
Patent Office

Office européen
des brevets

(11) **EP 1 813 855 A1**

(12) **EUROPEAN PATENT APPLICATION**

(43) Date of publication:
   **01.08.2007 Bulletin 2007/31**

(51) Int Cl.:
   **F17C 5/02** (2006.01)    **F17C 9/00** (2006.01)
   **F17C 13/02** (2006.01)

(21) Application number: **06001698.7**

(22) Date of filing: **27.01.2006**

(84) Designated Contracting States:
   **AT BE BG CH CY CZ DE DK EE ES FI FR GB GR HU IE IS IT LI LT LU LV MC NL PL PT RO SE SI SK TR**
   Designated Extension States:
   **AL BA HR MK YU**

(71) Applicants:
   • **L'AIR LIQUIDE, Société Anonyme pour l'Etude et l'Exploitation des Procédés Georges Claude 75007 Paris (FR)**
   Designated Contracting States:
   **AT BE BG CH CY CZ DK EE ES FI FR GB GR HU IE IS IT LI LT LU LV MC NL PL PT RO SE SI SK TR**
   • **Air Liquide Deutschland GmbH 40235 Düsseldorf (DE)**
   Designated Contracting States:
   **DE**

(72) Inventors:
   • **Klebe, Ulrich 47647 Kerken (DE)**
   • **Hiller, Hans 47051 Duisburg (DE)**
   • **Theissen, Friedel 41812 Erkelenz (DE)**
   • **Michel, Friedel 40699 Erkrath (DE)**
   • **Frank, Thorsten 47249 Duisburg (DE)**

(74) Representative: **Kahlhöfer, Hermann KNH Patentanwälte Kahlhöfer Neumann Herzog Fiesser Karlstrasse 76 40210 Düsseldorf (DE)**

(54) **Process and arrangement for filling a high pressure gas container with liquefied gas under hydrostatic pressure**

(57)    The invention concerns a process, an arrangement and a device for filling a high pressure gas container (1) with liquefied gas, comprising the following steps connecting the gas container to a metering valve (17) and connecting the metering valve (17) to a first container (21) containing liquefied gas, wherein the first container (21) is positions above the gas container (1) at a geodetic height (H); opening the metering valve (17) and admitting the quantity of liquefied gas is supplied with the first container (21) into the gas container (1) at a hydrostatic pressure that corresponds to the geodetic height (H); closing the metering valve (17). As the hydrostatic pressure may be tightly controlled, the high pressure gas container (1) may be efficiently, reproducible, reliable and economically filled at a particularly high metering precision.

Fig. 4

EP 1 813 855 A1

**Description**

The invention concerns a process, an arrangement and a device for filling a high pressure gas container with liquefied gas.

For cold filling pressure containers, according to DE 101 07 895 a filling gas is cooled before its introduction into the pressure container, wherein on completion of the filling process the pressure container is sealed in a pressure-tight manner. As the gas warms up the pressure in the pressure container rises rapidly.

According to DE 198 17 324 a fuel gas is filled into a light weight tank made with a liner of chrome nickel steel inside of a fibre reinforced shell, wherein the fuel is introduced in deep cooled liquid form and is stored at a pressure above 300 bar.

According to WO 2005/043033 a pressure vessel, for example of an airbag system, is filled with a gas or a gas mixture at a temperature which is higher than the boiling point thereof, closing the cold vessel and a pressure is produced in the filled and closed vessel by heating it to ambient temperatures.

According to WO 2005/059431 a pressure container is filled with a gas mixture, wherein a gas mixture is introduced in its gaseous state or in its liquefied state or at least one gas component of a gas mixture is introduced in its gaseous state or in its liquefied state in a cooled pressure gas container.

US 1,414,359 discloses a process for filling compressed gas containers, wherein a given quantity of liquefied gas is placed in a vessel of low specific heat capacity that is suspended within the container, the container is closed, and the walls of the container are maintained at a temperature above 0°C until the enclosed substance has been converted into gaseous form.

DE 101 19 115 discloses a pressure container particularly suited for filling with low boiling permanent gases or gas mixtures at low temperatures which is provided on its inner surface with a material having a low heat conducting coefficient.

EP 0 033 386 discloses a process for transporting and storing permanent gases, in particular hydrogen, under pressure in pressure containers, wherein the gases are cooled to low temperatures above their boiling point and are transported and stored in isolated pressure containers.

It is known, that airbags in vehicles are increasingly using new types of gas generators, which in the event of an accident inflate the airbag within a few milliseconds. High pressure gas storage systems are used as gas generators.

Three different types of gas generators are currently in use:

-    Chemical generators which generate gas by reaction of a chemical solid with ambient air;

-    Hybrid generators which use both a fuel solid and gas that is stored in a pressurized high pressure gas container;

-    Cold gas generators that store gas in pressurized gas containers at high pressures up to 700 bar at 15°C.

The gas generators, which are filled with various gases at ambient temperatures, provide for considerable technical problems, both in terms of their production and their filling with pressures of up to 700 bar or above. The heat of compression in particular during a rapid filling leads to undefined temperature conditions which usually considerably affect the metering precision with which the amount of gas is introduced into the gas containers. To meet a high metering standard is important with respect to the subsequent inflation characteristics of the airbag. Very expensive and complex piston or diaphragm compressors are required to generate the very high pressures. This entails high investment and high maintenance costs. In addition, a correspondingly complex and expensive downstream gas supply is required for these pressures.

The known cold filling techniques avoid the problem originating from the filling of high pressures, however, these techniques usually work at extremely low temperatures which makes multiple adaptations of conventional process steps, such as the sealing of the gas container, to the low temperature conditions necessary, which is not desirable with respect investment and maintenance costs.

It is desirable that the density of the gas stored in a gas container is as high as possible, wherein the filling of the gas container should be reliable, reproducible, save and economical. The amount of gas filled into the container should be precisely metered and the throughput of gas filling facility should be as high as possible.

Particularly with respect to airbag protection systems it is very important to precisely control the metering of the quantity of gas that it is introduced into the gas container. In fact, the life saving capability of the airbag sensitively depends on the amount of gas contained in the closed gas container.

A known solution for controlling this metering consists in accurately measuring the quantity of gas introduced into the gas container, for example by pressure measurements or flow detection means. Another solution consists in accurately measuring the volume of liquid introduced by using a buffer tank between the liquid source and the gas container to be filled. The buffer tank has volume characteristics that serve to control the volume of gas delivered to the gas container to be filled.

However, the known methods are comparatively complex, expensive and difficult to implement industrially on a large scale, particularly at high production rates.

If the filling of the gas container is performed at ambient temperatures the filling process is complicated by the high pressures involved which may higher than 300 bar up to 1.300 bar.

If the filling of the gas container is performed at low temperatures for avoiding the handling of such high pressures, the precise metering of the liquefied gas is complicated by the requirement that the metering process needs to be performed at low temperatures as low as 100°K or below.

An object of the present invention is to provide for a process, an arrangement as well as a device for filling a high pressure gas container with liquefied gas that allow for efficient, reproducible, reliable, economical and precise filling of high pressure gas containers.

This and other problems are solved according to the invention by the process, the arrangement and the device for filling a high pressure gas container with liquefied gas as defined in the claims below. Further advantages, embodiments and developments, which can be employed individually or in any suitable combination, are also provided.

According to the invention the process for filling a high pressure gas container with liquefied gas comprises the following steps:

- Connecting the gas container to a metering valve and connecting the metering valve to a first container containing liquefied gas, wherein the first container is positioned above the gas container at a geodetic height;

- opening the metering valve and admitting that a quantity of liquefied gas is supplied from the first container into the gas container at the hydrostatic pressure that corresponds to the geodetic height;

- closing the metering valve.

With the invention it is possible to fill a high pressure gas container with a liquefied gas. The amount of gas that is introduced into the gas container is metered precisely by using hydrostatics for defining a pressure level under which the liquefied gas is introduced into the gas container.

The exact amount of the quantity of liquefied gas that is introduced into the gas container may be controlled simply by means of an opening time of a metering valve that is positioned in the fluid connection between the first container and the gas container. A feed back loop for controlling the quantity of gas that is introduced is not necessary anymore.

The hydrostatic pressure of the liquefied gas is the pressure due to the weight of the liquid gas and is defined as the product of the density of the liquefied fluid, times the geodetic height h of the fluid above the point being measured, times the gravitational constant (g = 9,81 m/s$^2$).

The hydrostatic pressure may be controlled tightly with an accuracy of better than 3 %, in particular better than 2 %, for example better than 1 %. Due to the well defined pressure level, the amount of gas that is introduced in the gas container may be precisely controlled by the opening time of a metering valve that is positioned in the fluid connection between the first container and the gas container.

The high metering precision may be performed even at low temperatures of 100°K or below. The pressure fluctuations that are induced by fluctuations of a pump are avoided.

The high pressure gas container may withstand pressures above 300 bar, for example up to 1300 bar, in particular in between 500 bar and 800 bar. The high pressure gas container may be particularly intended for use in connection with an airbag system.

The gas to be introduced into the container may be a pure gas or a mixture of gases and may be an inert gas such as a noble gas for applications such as airbag systems.

It should be noted that the high pressure gas container may be used for a fuel cell. In this case the gas container stores a fuel gas such as hydrogen.

The gas container may be filled with a cryogenically liquefied gas and high pressure may be obtained by closing the gas container shortly after its filling and letting the gas container warm up to ambient temperature such as room temperature.

The first container may contain liquefied gas to a level that is tightly controlled. The liquid level in the first container may be controlled to remain constant.

Advantageously the volume of the liquefied gas that is introduced into the gas container should be much smaller than the product of the open liquid surface in the first container and the geodetic height. In particular the ratio between this volume and this product should be smaller than 1 : 20, in particular smaller than 1 : 50, for example smaller than 1 : 100. Through this provision, during the filling of one gas container the relative vertical drop of the liquid level in the first container relative to the geodetic height is less than 5 %, respectively less than 2 %, respectively less than 1 %, implying the hydrostatic pressure to be accurate within 5 %, respectively within 2 %, respectively 1 %. The liquid level in the first container drops only a little bit during the filling of the gas container such that the pressure conditions are well defined during filling.

Advantageously the liquefied gas contained in the first container, in the gas container and/or in the fluid connection between the first container and the gas container is kept at a temperature below the boiling point of the liquefied gas. For example the temperature of the liquefied gas is at least 1 ° K below the boiling point. The temperature of the liquefied gas in the gas container may be above the melting point of the liquefied gas, in particular at least 1° K above the melting point. Through this provision, the liquefied gas is kept in a stable liquid phase. In particular the formation of gas bubbles in the first container, in the gas container and/or in the fluid connection between the first container and the gas container is avoided. A formation of gas bubbles is not desirable from the viewpoint of a high metering precision and/or evaporation losses.

Advantageously the pressure in the first container above the liquid level is the same as the pressure in the gas container above the liquid level contained therein. For example both the first container and the gas container are allowed to balance out the pressure levels in the gaseous phases. For example both the gas container and the first container are open to the ambient atmosphere. Alternatively, the first container may be connected to the gas container via a venting conduit which allows gaseous exchange between the respective gaseous phases of the two containers. Through this provision fluctuations of the ambient pressure and / or temperature gradients do not negatively affect the accuracy of the metering precision.

The hydrostatic pressure may be higher than 0,1 bar, in particular higher than 0,2 bar, for example higher than 0,3 bar, and/or may be lower than 1 bar, in particular lower than 0,7 bar, for example lower than 0,5 bar. The geodetic pressure may also be adjustable at different levels.

Advantageously prior to the supplying step an opening time of the metering valve is predetermined. Due to the well defined pressure level under which the liquefied gas is supplied from the first container into the gas container, it is possible to set a certain opening time of the metering valve in order to precisely meter the quantity of liquefied gas into the gas container. Sensors for determining whether the gas container is sufficiently filled may not be necessary anymore.

The quantity that is introduced into the gas container results from the hydrostatic pressure and hydrodynamic fluid resistance in the fluid connection between the first container and the gas container and the fluid resistance of the metering valve.

Advantageously the fluid resistance of the fluid connection between the first container and the gas container without the metering valve is grater than the fluid resistance of the metering valve. Through this provision inaccuracies during of of the closing or opening of the metering valve may have less influence on the metering precision of the filling process.

The opening time of the metering valve may be less than 30 sec, in particular less than 20 sec., for example less than 10 sec, such as less than 5 sec. The opening time may be longer than 0,5 sec, in particular longer than 1 sec.

Advantageously the liquid level of the liquefied gas in the first container is controlled. The liquid level may be controlled using a feedback loop. In particular the liquid level is determined and adjusted from one filling cycle to the other or on a longer time basis. The liquid level in the first container may also be continuously monitored and adjusted.

Advantageously the liquid level in the first container is controlled by supplying from a reservoir container more liquefied gas into the first container than is being discharged from the first container to the gas container, the liquefied gas in excess being returned to the reservoir container. The liquefied gas in excess may overflow a given barrier at the first container and return to the reservoir container so that the liquid level in the first container can not be higher than the level of the barrier. During the time when the liquefied gas is discharged from the first container into the gas container, the liquid level in the first container does not drop below the level that is defined by the barrier, because the quantity of liquefied gas being discharged is immediately refilled by the liquefied gas in excess.

Advantageously the rate of liquefied gas in excess that is supplied from the reservoir container into the first container is higher than the rate of liquefied gas being supplied from the first container into the gas container.

Advantageously gas containers for airbag systems are filled. Also gas containers in connection for fuel cells may be filled with the process.

According to the invention the arrangement for filling a high pressure gas container with liquefied gas comprises the gas container containing the liquefied gas, a metering valve, and a first container for the liquefied gas, which is positioned above the gas container at a geodetic height; wherein the gas container, the metering valve and the first container are in fluid connection such that during filling the quantity of liquefied gas is introduced from the first container into the gas container at the hydrostatic pressure the corresponds to the geodetic height.

As the hydrostatic pressure may be comparatively easily controlled tightly, the pressure under which the liquefied gas is supplied into the gas container may be precisely controlled such that the precise quantity of liquefied gas introduced into the gas container may easily be controlled with the opening time of the metering valve. In consequence it is possible to precisely fill high pressure gas containers with liquefied gas in an efficient reproducible, reliable and economical way.

The geodetic height may be at least 0,7 m, in particular at least 1,4 m, for example at least 2,1 m, and/or the geodetic height is less than 10 m, in particular less than 7 m, for example less than 4 m.

The arrangement may comprise a unit for predetermining the opening time of the metering valve. The opening time of the metering valve may be set prior to opening and closing the metering valve. The level control unit may comprise a feedback loop unit for keeping the liquid level in the first container in a constant level.

Advantageously the arrangement further comprises a reservoir container which is connected with the first container via supply conduit having a pumping unit for pumping the liquefied gas in excess into the first container. The reservoir container may be connected with the first container via a return conduit for returning the excess liquefied gas into the reservoir container. The supply conduit and the return conduit allow for maintaining a constant liquid level in the first container.

The liquid level in the first container may be kept constant with an accuracy of better than 5 %, in particular better than 2 %, for example better than 1 %.

The liquefied gas in the first container may have a liquid surface (i.e. the surface of the liquefied gas which forms the interface between its liquid phase and its gaseous phase in the first container) and the volume of the quantity to be introduced into the gas container may be smaller than the product of the liquid surface times the geodetic height. The ratio between this volume and this product may be 1 : 20 or less, in particular 1 : 50 or less, for example less 1 : 100 or less.

Advantageously the arrangement further comprises a hydrodynamic resistance element having a fluid resistance greater than the fluid resistance of the metering valve. Alternatively the fluid resistance of the fluid connection between the first container and the gas container without the metering valve is greater than the fluid resistance of the metering valve per se. Through this provision the opening time of the metering valve for completely filling the gas container is prolonged such that inaccuracies of the opening and closing of the metering valve only influence the metering precision to a smaller extent. Thus the metering accuracy is further increased.

According to the invention the device for filling a high pressure gas container with liquefied gas is adapted to be used with the arrangement according to the invention. Advantageously the device is destined to be used with the arrangement according to the invention.

Further details and favourable aspects, which may be applied alone or may be combined in any suitable manner, will be explained with respect to the following drawings, which shall not restrict the scope of the present invention but shall schematically and exemplarily illustrate the invention.

Fig. 1    shows the two-step process according to the invention;

Fig. 2    shows a high pressure gas container to be used according to the invention shown in cross section;

Fig. 3    shows further high pressure gas container to be used according to the invention shown in cross section;

Fig. 4    shows a detailed view of a supplying unit of a filling device according to the invention;

Fig. 5    shows a supplying unit of a further embodiment of the filling device according to the invention; and

Fig. 6    schematically shows an arrangement according to the invention for filling a high pressure gas container at a geodetically controlled hydrostatic pressure.

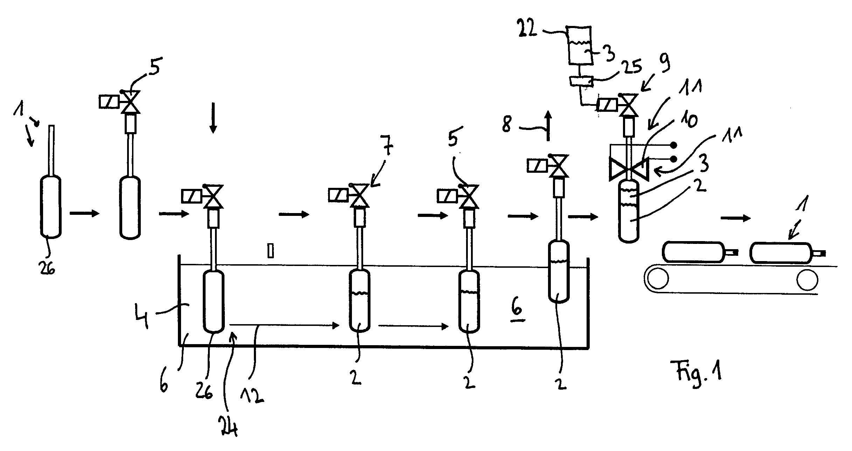

Fig. 1 shows schematically the two-step process for filling a high pressure gas container 1 with a first gas 2 and a second gas 3 using a supplying unit 7 for supplying the first gas 2 into the gas container 1 and an introducing unit 9 for introducing the second gas 3 into the gas container 1. The gas container 1 comprises a container body 26 for receiving the first gas 2 and the second gas 3 and is connected to an auxiliary valve 5. The gas container 1 is connected to a cooling bath 4 which comprises a third gas 6 which is liquefied in order to precool the gas container 1 down to 86°K. The third gas 6 is liquid nitrogen which is kept under a slight pressure in the cooling bath 4 in order to provide for 86°K in the cooling bath 4. This precooling is performed using a precooling unit 24 which at least partially immerses the gas container 1 in the cooling bath 4. The gas container 1 is then transported with a transport mechanism 12 to a supplying unit 7 for supplying liquid argon as first gas 2 into the gas container 1. Then the auxiliary valve 5 is closed in order to diminish evaporation losses of the first gas 2. Subsequently the cooling of the gas container 1 is stopped by disconnecting the gas container 1 from the cooling bath 2 by a stopping unit 8 and is transported to an introducing unit for introducing the second gas 3 in its gaseous state. The second gas 3 such as helium is taken from a second container 22 and is evaporated by an evaporator 25 and is introduced through the auxiliary valve 5. After completion of the introducing the auxiliary valve 5 is temporarily closed until the gas container 1 is permanently closed using a unit 10 for closing the gas container 1. The unit 10 for closing comprises a sealing device 11 which seals the gas container 1 by welding. Both the introducing unit 9 and the unit 10 for closing may be of a conventional type meaning that they do not need to be adapted for cryogenical temperatures and do not need to be capable of coping with high pressures above 300 bar. The second gas 3 is introduced at ambient temperature into the gas container 1. After closing the gas container 1 the gas container 1 are allowed to warm up to ambient temperatures such that the pressure inside of the container body 26 rises to a well-defined pressure around 600 bar. The first gas 2 may be supplied at a pressure ranging from 0,5 bar to 3 bar and the second gas 3 may be introduced at 15 bar. The amount of gas supplied respectively introduced into the gas container 1 may be controlled volumetrically, gravimetrically or by an opening time of a metering valve. The second gas may be metered according to the partial pressure that is eventually desired at room temperature. This metering may be performed outside of the cooling bath 4 for instance in the sealing device 11.

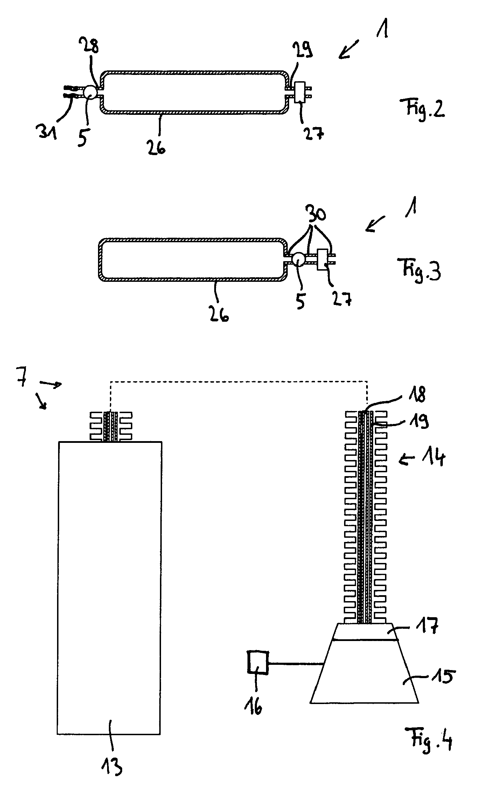

Fig. 2 shows a gas container 1 in cross section to be used according to the invention. The gas container 1 comprises the auxiliary valve 5 in a first connection line 28 to the container body 26 and a first valve 27 in a second connection line 29 to the container body 26. The first valve 27 is provided at the container body 26 before the beginning of the filling process. The first valve 27 is a membrane valve and is adapted to be opened at the instance of operation of the gas container 1 for example during the operation of the airbag system (not shown). The first valve 27 operates non-reversibly, i.e. opens only once. The first valve 27 may be welded to the container body 26 respectively to the second connection line 29. The auxiliary valve 5 is for facilitating the supplying of the first gas 2 respectively the introducing of the second gas 3 into the container body 26. The auxiliary valve 5 is for temporarily closing the container body 26 such that evaporation losses are reduced. After the supplying step of the first gas 2 respectively after the introducing step of the second gas 3, the auxiliary valve 5 is closed. The auxiliary valve 5 may also be closed in between the supplying and the introducing step. Once the container body 26 is completely filled with a gas 2, 3 or with a mixture of gases 2, 3 the first connection line 28 is closed using a sealing portion 31 by welding. The closing portion 31 makes sure that after the closing of the gas container 1, gas may not escape from the container body 26 through the first connection line 28. The sealing portion 31 allows for using inexpensive auxiliary valves 5 without limiting the advantages of temporarily closing the container body 26.

Fig. 3 shows a further gas container 1 in cross section to be used according to the invention, wherein the first valve 27 and the auxiliary valve 5 are in a fluid series connection 30. In this case the permanent closing of the container body 26 is realized by the first valve 27 which is closed after the filling of the container body 26 with a gas 2, 3 or a mixture of gases 2, 3. The auxiliary valve 5 is used for facilitating the supplying of the first gas and/or the introducing of the second gas 3.

Fig. 4 shows schematically the supplying unit 7 comprising a gas supply station 13 with a flexible filling tube 14 which is to be connected to the container 1. For connecting the filling tube 14 with the gas container 1, a tube head 15 is provided which comprises a metering valve 17. The tube head 15 is positioned at the gas container 1 with a positioning device 16. Due to the flexibility of the filling tube 14 a gas tight connection between the gas supply station 13, respectively the supplying unit 7, and the gas container 1 is established in a short time. The filling tube 14 is thermally isolated and comprises a gas channel 18 for supplying the first gas 2 into the gas container 1. The gas channel 18 is isolated by means of an insulation vacuum. For this purpose the filling tube 14 is doubled walled. For further reducing a heat transfer through radiation within the insulation vacuum a heat shield 19 is introduced, which is at least partially actively cooled. The moveable tube head 15 allows for a fast connection which is important if a multiplicity of gas containers 1 need to be filled.

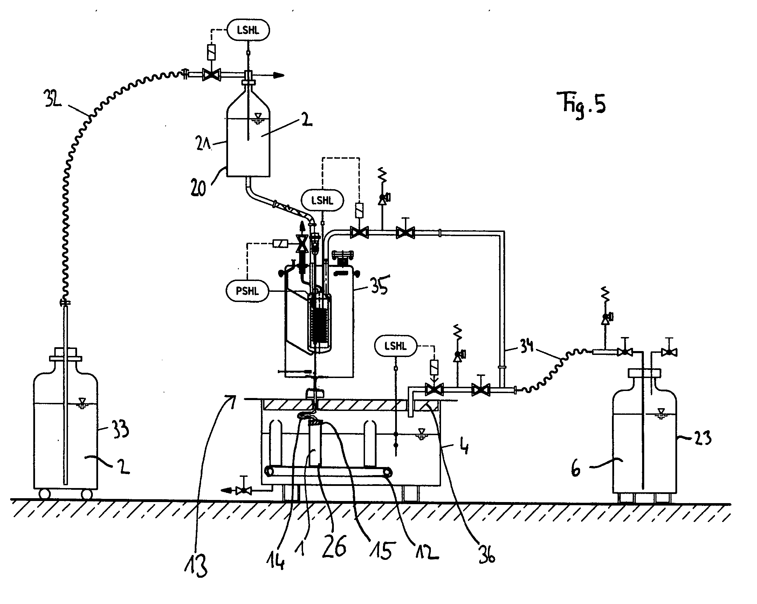

Fig. 5 shows a further embodiment of a supplying unit 7 of the device for filling gas containers 1. Liquid argon is stored as first gas 2 in a large supply tank 33 and is supplied through a supply tube 32 into a first container 21 which also serves as phase separator 20. The liquid argon from the phase separator 20 is precooled in a second precooling unit 35 for precooling the second gas 2. The liquid argon is cooled to 2°K below its boiling point in order to avoid any formation of gas bubbles within the liquid phase, which might affect the metering precision of the amount of gas supplied into the gas container 1. The second precooling unit 35 uses liquid nitrogen as third gas 6 from a third container 23 which is connected to the second precooling unit 35 with conduits 34. The precooled liquid argon is then supplied with the filling tube 14 to the gas container 1. For this purpose the filling tube 14 comprises a moveable tube head 15 which may be positioned precisely at the gas container 1. The gas container 1 is transported through the cooling bath by a transport mechanism 12. The cooling bath 4 is closed with a cover 36 in order to establish a pressure in the cooling bath 4 with which the temperature in the cooling bath is precisely controlled.

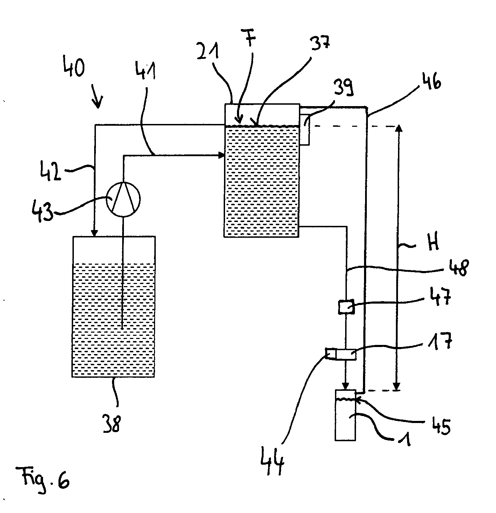

Fig. 6 schematically shows the arrangement according to the invention, in which the first container 21 is connected via a fluid connection 48 with the gas container 1. In the fluid connection 48 the metering valve 17 is positioned. When the metering valve 17 is opened, liquefied gas from first container 21 flows into the gas container 1 under the hydrostatic pressure p

$$p = H * \rho * g$$

with H being the geodetic height, ρ being the density of the liquefied gas and g being the gravitational constant g=9,81 m/s$^2$. The geodetic height H is taken from a liquid level 37 in the first container 21 and the lower open end of the fluid connection 48, i.e. the height of the liquid column. The liquid level 37 in the first container 21 is kept constant by pumping liquefied gas from a reservoir container 38 with a pumping unit 34 via a supply conduit 41 into the first container 21. The liquefied gas in excess returns to the reservoir container 38 via a return conduit 42. The liquid level 37 in the first container 21 is defined by the height of entrance of the return conduit 42 at the first container 21. The reservoir container 38, the first container 21, the supply conduit 42 with the pumping unit 43 and the return conduit 42 together form a level control unit 40. By means of the level control unit 40 the liquid level 37 in the first container 21 may be maintained constant with a precision of less than 1 mm. A feedback loop unit 39 is provided at the first container 21 for further keeping the liquid level 37 in the first container 21 constant. For instance if the quantity of liquefied gas supplied via fluid connection 48 into gas container 1 is higher than the amount of liquefied gas that is pumped through the supply content 42, the pumping power of the pumping unit 43 may further be increased. For the case that no reservoir container 38 is used, the feedback loop unit 39 may directly control the liquid level 37 in the first container 21. In the fluid connection 48 a hydrodynamic resistance element 47 is provided in order to make the hydrodynamic fluid resistance of the fluid connection 48 between the first container 21 and the gas container 1 taken without the metering valve 17 to be greater than the hydrodynamic fluid resistance of the metering valve 17 by itself. Through this provision the necessary opening time of the metering valve 17 is prolonged and inaccuracies of the operation of the metering valve 17 may less influence the metering precision. The opening time of the metering valve 17 may be predetermined by a unit 44 for predetermining the opening time of the metering valve 17. The opening time is set prior to opening and closing the metering valve 17. In order to avoid a difference in pressure between the gaseous phase in the first container 21 and the gaseous phase in the gas container 1, which could affect negatively the metering precision, a venting conduit 46 is provided which connects the first container 21 with the gas container 1. Through this provision pressure gradients resulting from temperature gradients between the containers 21, 1 are avoided and thus the metering precision is increased. The first container 21 and the gas container 1 may be kept under a positive pressure above 1,5 bar in order to avoid a formation of gas bubbles in the liquid phase of the gas to be introduced into the gas container 1. The liquefied gas to be introduced in the gas container 1 may be a first gas such as liquid argon or a first gas mixture. A second gas may be added further in its gaseous or in its liquefied state. The first container 21, the fluid connection 48 and the gas container 1 may be actively cooled, for example by the cooling bath 4.

In the following, further aspects, which are related to the present invention, are described. These individual aspects may be employed individually and separately or in any suitable combination with each other respectively one another:

An advantageous process for filling high pressure gas containers 1 comprises the steps: Supplying a liquefied or solidified first gas 2 from a gas supply station 13 through a thermally insulated filling tube 14 with a movable tube head 15 to the high pressure gas container 1. During the supplying step of the first gas 2, the gas container 1 may be cooled, in particular by a cooling bath 4. The filling tube 14 is in particular cooled at least partially along its length, in particular by the cooling bath 4. The filling tube 14 may be filled using a two step filling process, in which after the supplying step of the first gas 2, a gaseous second gas 3, in particular Helium, is introduced into the gas container 1, wherein in particular during the supplying step of the first gas 2, the gas container 1 is cooled, in particular by a cooling bath 4, and before or during the introducing step of the second gas 3 the cooling of the gas container 1 is stopped, in particular the gas container 1 is taken out of the cooling bath 4. Advantageously high pressure gas containers 1 for air bag systems or for fuel cells are filled. The first gas 2 and / or the second gas 3 may be a mixture of gases.

An advantageous process of batch filling of high pressure gas containers 1 with gas, comprises the step cooling multiple gas containers 1 in parallel, which are filled sequentially using the process according to the invention.

An advantageous arrangement for filling high pressure gas containers 1 with gas comprises a gas supply station 13 and multiple high pressure gas containers 1, wherein the gas supply station 13 comprises at least one thermally insulated filling tube 14 with a movable tube head 15 for gas filling of the gas containers 1, wherein the arrangement may comprise a positioning device 16 for moving the tube head 15 to the individual gas containers 1. Advantageously, a metering valve 17 for controlling a gas flow through the filling tube 14 may be provided in the tube head 15. The gas supply station 13 may comprise a cooling bath 4 for cooling the gas containers 1, wherein the filling tube 14 may be at least partially immersed in the cooling bath 4 and wherein the arrangement may further comprise a transport mechanism 12 for transporting the gas containers 1 through the cooling bath 4. In a useful embodiment, the filling tube 14 may be at least doubled walled and may comprise an insulation vacuum for thermal insulation. The filling tube 14 may be actively cooled by a cooling medium, in particular a liquefied third gas 6 and / or may comprise a gas channel 18 and a tubular heat shield 19 at least partially around the gas channel 18, wherein the heat shield 19 is cooled by the cooling medium. Tube head 15 may comprise an auxiliary valve 5 for temporarily closing the gas container 1. The gas filling tube 14 is in particular for filling a liquefied first gas 2 into the gas containers 1. The gas supply station 13 may comprise a first container 21 for a liquefied first gas 2. The gas supply station 13 may advantageously comprise an introducing unit 9 for introducing a gaseous second gas 3 into the gas container 1. The gas supply station 13 may comprise a second container 22 for a liquefied second gas 3, wherein the gas supply station 13 may comprise an evaporator 25 for converting the liquefied second gas 3 into its gaseous state. The gas supply station 13 may comprise a third container 23 for a liquefied third gas 6 as cooling medium.

An advantageous gas supply station 13 for filling high pressure gas containers 1 with gas is adapted and in particular destined for use in the arrangement according to the invention.

An advantageous high pressure gas container 1 with a container body 26 for storing gas and at least one first valve 27 for discharging the stored gas, is characterized by further comprising an auxiliary valve 5 for introducing the gas into the container body 26 and for temporarily closing the container body 26 until the container body 26 is sealed permanently, wherein the first valve 27 and the auxiliary valve 5 are in fluid connection with the container body 26, wherein in particular the first valve 27 and the auxiliary valve 5 may be connected to the container body 26 with separate fluid connection lines 28, 29, or, wherein in particular the first valve 27 and the auxiliary valve 5 may be connected to the container body 26 in a fluid series connection 30. The first valve 27 may be non-reversibly openable. Alternatively, the auxiliary valve 5 may be reversibly openable and closable. A sealing portion 31 may be provided at the auxiliary valve 5 for permanently closing the auxiliary valve 5, wherein in particular the sealing portion 31 may be provided in the fluid connection between the auxiliary valve 5 and the container body 26, or, wherein in particular the auxiliary valve 5 may be provided in the fluid interconnection between the sealing portion 31 and the container body 26. The auxiliary valve 5 may be one of the following valves: a ball cock, a ball valve, a bibcock, a butterfly valve, a gate valve, a globe valve, a check valve, a rotary valve, or a piston valve. The first valve 27 may in particular be a membrane valve. Advantageously, the high pressure gas container 1 may be adapted and/or destined for an air bag system, or, the high pressure gas container 1 may be adapted and/or destined for a fuel cell.

An advantageous process for filling a high pressure gas container 1 having a container body 26 for storing gas, at least one first valve 27 for discharging the stored gas and an auxiliary valve 5, wherein the first valve 27 and the auxiliary valve 5 are in fluid connection with the container body 26, comprises the following steps: The gas is introduced into the container body 26 through the auxiliary valve 5; the auxiliary valve 5 is at least temporarily closed; the auxiliary valve 5 is sealed permanently, wherein in particular the auxiliary valve 5 may be sealed by welding. The auxiliary valve 5 may also or instead be sealed by the first valve 27. Prior to filling the container body 26 with gas, the first valve 27 may be provided and may be configured at the gas container 1.

An advantageous process for filling a high pressure gas container 1, comprises the following steps: Supplying a liquefied or solidified first gas 2 into a gas container 1 while the gas container 1 is being cooled; stopping the cooling of the gas container 1 after the supplying step of the first gas; then introducing a gaseous second gas 3 into the gas container 1; closing the gas container 1, wherein in particular the cooling of the gas container 1 may be performed in a cooling bath 4, in particular a cooling bath 4 of liquid nitrogen, and the cooling is stopped by disconnecting the gas container 1 from the cooling bath 4. The first gas 2 and / or the second gas 3 may be a mixture of plural gases. The first gas 2 and / or the second gas 3 may be an inert gas, in particular a noble gas. After the supplying step of the first gas 2 and before the introducing step of the second gas 3 the gas container 1 may be temporarily closed. The gas container 1 is in particular temporarily closed using an auxiliary valve 5. The closing of the gas container 1 may be performed by welding. The gas containers 1 are in particular for air bag systems or for fuel cells. The supplying of the first gas 2 may be performed at a pressure in the range from 0,2 bar to 15 bar , in particular in the range from 0,5 bar to 4 bar. The supplying of the second gas 3 may be performed at a pressure in the range from 2 bar to 100 bar, in particular, in the range from 5 bar to 50 bar, for example in the range from 10 bar to 20 bar. The first gas 2 may be supplied in a liquid state into the gas container 1 and solidifies in the gas container 1. The first gas 2 may be supplied at a temperature lower than its boiling temperature, in particular at least 1°K, preferably at least 2° K, lower than its boiling temperature, and at a temperature higher than its freezing temperature, in particular at least 1°K, preferably at least 2° K, higher than its freezing temperature. After the supplying step of the first gas 2 and before the introducing step of the second gas 3, the gas container 1 may be connected to a sealing device 11, in particular a welding apparatus 12, and after the introducing step of the second gas 3 the gas container 1 may be sealed by the sealing device 11, in particular by welding. The cooling is in particular performed using a liquefied third gas 6, in particular liquid nitrogen, wherein in particular the temperature of the third gas 6 may be controlled by controlling the pressure in the third gas 6. The gas container 1 may be cooled before the supplying step of the first gas 2.

An advantageous device for filling high pressure gas containers 1, comprises: A supplying unit 7 for supplying a liquefied or solidified first gas 2 into a gas container 1 while the gas container 1 is being cooled; a stopping unit 8 for stopping the cooling of the gas container 1; an introducing unit 9 for introducing a gaseous second gas 3 into the gas container 1 after the supplying step of the first gas; a unit 10 for closing the gas container 1, wherein in particular the device further comprises a cooling bath 4 for cooling the gas container 1, wherein in particular the device further comprises a transport mechanism 12 for transporting the gas containers 1 through the cooling bath 4. The unit 10 for closing the gas container 1 may be a welding apparatus 12. The device is in particular for filling high pressure gas containers 1 for air bag systems or for fuel cells. The device in particular further comprises a gas supply station 13 and at least one thermally insulated filling tube 14 with a tube head 15 that is in fluid connection with the gas supply station 13, wherein the filling tube 14 is for supplying the first gas 2 to the gas containers 1, wherein the device in particular further comprises a positioning device 16 for positioning the tube head 15 at the gas containers 1.

The invention concerns a process, an arrangement and a device for filling a high pressure gas container 1 with liquefied gas, comprising the following steps connecting the gas container to a metering valve 17 and connecting the metering valve 17 to a first container 21 containing liquefied gas, wherein the first container 21 is positions above the gas container 1 at a geodetic height H; opening the metering valve 17 and admitting the quantity of liquefied gas is supplied with the first container 21 into the gas container 1 at a hydrostatic pressure that corresponds to the geodetic height H; closing the metering valve 17. As the hydrostatic pressure may be tightly controlled, the high pressure gas container 1 may be efficiently, reproducible, reliable and economically filled at a particularly high metering precision.

**Reference numerals**

| | |
|---|---|
| 1 | gas container |
| 2 | first gas |
| 3 | second gas |
| 4 | cooling bath |
| 5 | auxiliary valve |
| 6 | third gas |
| 7 | supplying unit |
| 8 | stopping unit |
| 9 | introducing unit |
| 10 | unit for closing |
| 11 | sealing device |
| 12 | transport mechanism |
| 13 | gas supply station |
| 14 | filling tube |
| 15 | tube head |
| 16 | positioning device |
| 17 | metering valve |
| 18 | gas channel |
| 19 | heat shield |
| 20 | phase separator |
| 21 | first container |
| 22 | second container |
| 23 | third container |
| 24 | precooling unit |
| 25 | evaporator |
| 26 | container body |
| 27 | first valve |
| 28 | first connection line |
| 29 | second connection line |
| 30 | fluid series connection |
| 31 | sealing portion |
| 32 | supply tube |
| 33 | supply tank |
| 34 | conduits |
| 35 | second precooling unit |
| 36 | cover |
| 37 | liquid level in first container 21 |
| 38 | reservoir container |
| 39 | feedback loop unit |
| 40 | level control unit |
| 41 | supply conduit |
| 42 | return conduit |
| 43 | pumping unit |
| 44 | unit for predetermining the opening time of the metering valve 17 |
| 45 | liquid level in gas container 1 |
| 46 | venting conduit |
| 47 | resistance element |
| 48 | fluid connection |
| H | geodetic height |

F    surface of liquid level

**Claims**

1.  Process for filling a high pressure gas container (1) with liquefied gas, comprising the following steps:

    Connecting the gas container (1) to a metering valve (17) and connecting the metering valve (17) to a first container (21) containing liquefied gas, wherein the first container (21) is positioned above the gas container (1) at a geodetic height (H);
    opening the metering valve (17) and admitting that a quantity of liquefied gas is supplied from the first container (21) into the gas container (1) at the hydrostatic pressure that corresponds to the geodetic height (H);
    closing the metering valve (17).

2.  Process according to claim 1, **characterized in that** the hydrostatic pressure is higher than 0,1 bar, in particular higher than 0,2 bar, for example higher than 0,3 bar, and /or the hydrostatic pressure is lower than 1 bar, in particular lower than 0,7 bar, for example lower than 0,5 bar.

3.  Process according to claim 1 or 2, **characterized in that** prior to the supplying step an opening time of the metering valve (17) is predetermined.

4.  Process according to one of the preceding claims, further comprising the step controlling the liquid level (37) of the liquefied gas in the first container (21).

5.  Process according to claim 4, **characterized in that** the liquid level (37) is controlled using a feed back loop.

6.  Process according to claim 4, **characterized in that** the liquid level (37) is controlled by supplying from a reservoir container (38) more liquefied gas into the first container (21) than is being discharged from the first container (21) to the gas container (1), the liquefied gas in excess being returned to the reservoir container (38).

7.  Process according to one of the preceding claims, **characterized in that** gas containers for air bag systems are filled.

8.  Arrangement for filling a high pressure gas container (1) with liquefied gas, comprising
    the gas container (1) containing the liquefied gas,
    a metering valve (17), and
    a first container (21) for the liquefied gas, which is positioned above the gas container (1) at a geodetic height (H);

wherein the gas container (1), the metering valve (17) and the first container (21) are in fluid connection such that during filling a quantity of liquefied gas is introduced from the first container (21) into the gas container (1) at the hydrostatic pressure that corresponds to the geodetic height (H).

**9.** Arrangement according to claim 8, **characterized in that** the geodetic height (H) is at least 0.7 m, in particular at least 1.4 m, for example at least 2.1 m, and / or the geodetic height (H) is less than 10 m, in particular less than 7 m, for example less than 4 m.

**10.** Arrangement according to claim 8 or 9, **characterized by** a unit (44) for predetermining the opening time of the metering valve (17).

**11.** Arrangement according to one of claim 8 to 10, further comprising a level control unit (40) for controlling the liquid level (37) of the liquefied gas in the first container (21).

**12.** Arrangement according to claim 11, **characterized in that** the level control unit (40) comprises a feedback loop unit (39).

**13.** Arrangement according to claim 11 or 12, further comprising a reservoir container (38) which is connected with the first container (21)
via a supply conduit (41) having a pumping unit (43) for pumping the liquefied gas in excess into the first container (21), and
via a return conduit (42) for returning the excess liquefied gas into the reservoir container (38),
for maintaining a constant liquid level (37) in the first container (21).

**14.** Arrangement according to one of claim 8 to 13, **characterized in that** the liquefied gas in the first container (21) has a liquid surface (F) and the volume of the quantity to be introduced into the gas container (1) is smaller than the product of the liquid surface (F) times the geodetic height (H) as 1:20 or less, in particular as 1: 50 or less, for example as 1: 100 or less.

**15.** Arrangement according to one of claim 8 to 14, further comprising a resistance element (47) having a fluid resistance greater than the fluid resistance of the metering valve (17).

**16.** Device for filling a high pressure gas container (1) with liquefied gas in connection with the arrangement as defined in one of the claims 8 to 15.

Fig. 1

Fig.2

Fig.3

Fig.4

Fig.5

Fig. 6

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 022 509 A (MESSER GRIESHEIM GMBH) 26 July 2000 (2000-07-26) <br><br> * the whole document * | 1-4, 7-11, 14-16 | F17C5/02 <br> F17C9/00 <br> F17C13/02 |
| A | | 6,13 | |
| X | US 2005/086857 A1 (LEE CHIH-PING ET AL) 28 April 2005 (2005-04-28) <br><br> * the whole document * | 1,2,4,5, 8,9,11, 12,16 | |
| X | US 2004/221918 A1 (VIEGAS HERMAN H ET AL) 11 November 2004 (2004-11-11) <br> * the whole document * | 1-5,8-12 | |
| X | FR 2 809 794 A (SOCIEDAD ESPANOLA DE CARBUROS METALICOS SA) 7 December 2001 (2001-12-07) <br> * the whole document * | 1-3,8-10 | |
| X | FR 2 841 963 A (L'AIR LIQUIDE SOCIETE ANONYME POUR L'ETUDE ET L'EXPLOITATION DES PROCE) 9 January 2004 (2004-01-09) <br> * the whole document * | 1,2,4,5, 8,9,11, 12,14,16 | TECHNICAL FIELDS SEARCHED (IPC) <br><br> F17C |
| X | US 5 616 838 A (PRESTON ET AL) 1 April 1997 (1997-04-01) <br> * the whole document * | 1,8 | |
| X | WO 2005/121632 A (AIR LIQUIDE DEUTSCHLAND GMBH; L'AIR LIQUIDE SOCIETE ANONYME A DIRECTOI) 22 December 2005 (2005-12-22) <br> * the whole document * | 1,8 | |
| X | FR 2 865 018 A (L'AIR LIQUIDE SOCIETE ANONYME POUR L'ETUDE ET L'EXPLOITATION DES PROCE) 15 July 2005 (2005-07-15) <br> * the whole document * | 1-5,8-12 | |

-/--

The present search report has been drawn up for all claims

| Place of search | Date of completion of the search | Examiner |
|---|---|---|
| Munich | 21 February 2006 | Nicol, B |

EPO FORM 1503 03.82 (P04C01)

**European Patent Office**

**EUROPEAN SEARCH REPORT**

Application Number

EP 06 00 1698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 91/03679 A (SITTE, HELLMUTH) 21 March 1991 (1991-03-21) * the whole document * ----- | 1,8 | |
| A | US 4 399 658 A (NIELSEN ET AL) 23 August 1983 (1983-08-23) ----- | | |

TECHNICAL FIELDS SEARCHED (IPC)

The present search report has been drawn up for all claims

| Place of search | Date of completion of the search | Examiner |
|---|---|---|
| Munich | 21 February 2006 | Nicol, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................................

& : member of the same patent family, corresponding document

EPO FORM 1503 03.82 (P04C01)

**EP 1 813 855 A1**

## ANNEX TO THE EUROPEAN SEARCH REPORT
## ON EUROPEAN PATENT APPLICATION NO.

EP 06 00 1698

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2006

| Patent document cited in search report | | Publication date | Patent family member(s) | | Publication date |
|---|---|---|---|---|---|
| EP 1022509 | A | 26-07-2000 | DE | 19902677 A1 | 14-09-2000 |
| US 2005086857 | A1 | 28-04-2005 | NONE | | |
| US 2004221918 | A1 | 11-11-2004 | AU | 2002351527 A1 | 15-07-2003 |
| | | | EP | 1463905 A1 | 06-10-2004 |
| | | | WO | 03056232 A1 | 10-07-2003 |
| | | | NO | 20016354 A | 23-06-2003 |
| FR 2809794 | A | 07-12-2001 | DE | 20109315 U1 | 04-10-2001 |
| | | | ES | 1046491 U1 | 01-01-2001 |
| | | | IT | MI20010308 U1 | 04-12-2002 |
| | | | PT | 9727 U | 28-12-2001 |
| FR 2841963 | A | 09-01-2004 | AU | 2003260622 A1 | 23-01-2004 |
| | | | CA | 2491022 A1 | 15-01-2004 |
| | | | EP | 1521933 A2 | 13-04-2005 |
| | | | WO | 2004005791 A2 | 15-01-2004 |
| US 5616838 | A | 01-04-1997 | NONE | | |
| WO 2005121632 | A | 22-12-2005 | NONE | | |
| FR 2865018 | A | 15-07-2005 | WO | 2005075882 A1 | 18-08-2005 |
| WO 9103679 | A | 21-03-1991 | AT | 394460 B | 10-04-1992 |
| | | | AT | 211789 A | 15-09-1991 |
| US 4399658 | A | 23-08-1983 | CA | 1094335 A1 | 27-01-1981 |
| | | | DE | 2906475 A1 | 04-09-1980 |
| | | | FR | 2449256 A1 | 12-09-1980 |
| | | | GB | 2042148 A | 17-09-1980 |

For more details about this annex : see Official Journal of the European Patent Office, No. 12/82

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10107895 A
- DE 19817324 A
- WO 2005043033 A
- WO 2005059431 A
- US 1414359 A
- DE 10119115
- EP 0033386 A